# FASCICULE DE BREVET EUROPEEN

(11) **EP 1 630 918 B1**
(45) Date de publication et mention de la délivrance du brevet: **08.08.2007**
(21) Numéro de dépôt: 05300688.8
(22) Date de dépôt: 23.08.2005
(51) Int. Cl.: H02G 1/12

(54) **Appareil pour le montage d'un câble de transmission de données sur une pièce d'équipement**
Vorrichtung zum Montieren eines Kabels zur Übertragung von Daten auf ein Gerät
Apparatus for mounting of a data transmission cable on an equipment device

(30) Priorité: 27.08.2004 FR 0451915
(43) Date de publication de la demande: 01.03.2006
(73) Titulaire: Nexans, 75008 Paris (FR)
(72) Inventeur: Delsaert, Bart, B3090, Overijse (BE); Van Ranst, Jurgen, B1785, Merchtem (BE)
(74) Mandataire: Lenne, Laurence

(56) Documents cités:
- EP-A- 1 045 499
- FR-A- 2 076 247
- US-A- 6 089 125

## Description

L'invention concerne un appareil de montage d'un câble de transmission de données sur une pièce d'équipement.

Le brevet US 6 089 125, qui représente l'état de la technique le plus proche, décrit un appareil de dégainage de conducteurs.

L'invention se rapporte plus précisément à un câble à paires de conducteurs constitué de ces paires enveloppées chacune par une feuille métallique, les conducteurs enveloppés étant tous contenus dans une gaine externe de matière plastique. Chaque paire est constituée de deux conducteurs métalliques contenus chacun dans une gaine isolante.

Afin de monter ce câble sur une pièce d'équipement, telle qu'une pièce terminale d'un connecteur, il est nécessaire tout d'abord de couper un tronçon de la gaine afin de libérer les paires enveloppées de leur feuille métallique. Cet enlèvement de la gaine peut s'effectuer grâce à un outil connu.

Les paires, par exemple au nombre de quatre, doivent alors être disposées par croisement de certaines paires selon une condition impérative de montage, chaque enveloppe métallique doit être enlevée sur un tronçon de longueur et les extrémités de conducteurs ainsi libérées sont introduites dans les contacts de la pièce d'équipement pour la connexion.

Ces opérations après dégainage de la gaine externe sont effectuées manuellement à l'aide d'un outil de type cutter pour couper l'enveloppe.

Or, il est souhaitable d'avoir des conducteurs dénudés de leur enveloppe métallique de longueur constante et déterminée afin de réaliser correctement la connexion à la pièce d'équipement.

Par cette réalisation actuelle totalement manuelle, cette précision ne peut être obtenue, d'autant plus que les croisements entre paires entraîne une variation des longueurs de conducteurs hors la gaine externe au niveau de la connexion à la pièce d'équipement et augmente cette imprécision. Il peut même arriver que la longueur d'enveloppe métallique enlevée s'avère trop courte et que la longueur correspondante de conducteur dénudé soit trop courte pour réaliser une connexion fiable à la pièce d'équipement.

De plus cette opération manuelle est relativement délicate et longue.

L'invention résout ces problèmes grâce à un appareil permettant le montage d'un câble de transmission de données sur une pièce d'équipement avec précision et fiabilité.

Pour ce faire, l'invention propose un appareil de dénudage d'un câble de transmission de données, comportant un dispositif de maintien en position relative de conducteurs et un dispositif de coupe des enveloppes de ces conducteurs dans un même plan, ledit câble comportant une pluralité desdits conducteurs enveloppés par paires dans une feuille métallique, **caractérisé en ce que** ledit dispositif de maintien est un dipositif de maintien en position relative de paires de conducteurs, en ce que ledit dispositif de coupe est un dispositif de coupe de l'enveloppe de ces paires de conducteurs et en ce qu'il comporte également un agencement de positionnement d'une pièce d'équipement sur lesdites paires.

Grâce à cet appareil, l'opération de préparation des conducteurs et de connexion à la pièce d'équipement peut être réalisée de façon répétitive et identique.

De préférence, ledit dispositif de maintien est constitué de deux branches, de type pince, articulées d'une position ouverte à une position fermée et inversement, une première extrémité des branches constituant un agencement de maintien comprenant des fentes en vis-à-vis séparées par une barrette centrale montée sur l'articulation desdites branches et une seconde extrémité constituant un agencement de préhension.

Avantageusement, ledit dispositif de coupe est constitué d'un agencement coulissant sur ledit dispositif de maintien et comportant au moins quatre lames tranchantes.

De préférence, le dispositif de maintien et ledit agencement coulissant sont conçus de telle sorte que ce dernier bloque en position fermée ou libère de sa position fermée le dispositif de maintien selon le positionnement relatif de ces deux dispositifs.

Avantageusement, lesdites lames tranchantes sont portées par trois couteaux fixés sur ledit agencement coulissant sur une face du dispositif de maintien, deux couteaux externes portant une lame tranchante dirigée vers ladite barrette centrale et un couteau central portant deux lames tranchantes parallèles aux précédentes.

De préférence, ledit agencement de positionnement de la pièce d'équipement est constitué de cavités agencées sur lesdites premières extrémités des branches et sur ladite barrette, ces cavités formant une cavité d'emboîtement de ladite pièce d'équipement en position fermée.

L'appareil peut comprendre des marques de repérage du positionnement relatif des paires de conducteurs.

Il peut également comprendre des marques de repérage du positionnement de la pièce d'équipement et du positionnement relatif de chaque conducteur.

L'invention concerne également un procédé de montage d'un câble de transmission de données sur une pièce d'équipement, ce câble comportant une pluralité de conducteurs enveloppés par paires dans une feuille métallique et dénudés d'une gaine externe, grâce à l'appareil selon une des revendications précédentes, caractérisé en ce qu'il comporte les étapes suivantes :
- croisement des paires de conducteurs dénudés de la gaine externe, selon les conditions de montage,
- insertion des conducteurs dans ledit dispositif de maintien, jusqu'à butée contre l'appareil du côté de la gaine externe,
- actionnement du dispositif de coupe sur les les enveloppes métalliques,
- enlèvement des tronçons d'enveloppes métalliques coupées.

De préférence, ce procédé comporte les étapes ultérieures suivantes :
- insertion des conducteurs dans la pièce d'équipement et positionnement de cette pièce sur l'appareil,
- connexion des conducteurs sur la pièce d'équipement,
- retrait de la pièce d'équipement et des conducteurs montés sur celle-ci.

Avantageusement, ce procédé comporte les étapes suivantes :
- insertion des conducteurs dans ledit dispositif de maintien par insertion des conducteurs dans lesdites fentes, l'appareil étant en position fermée, jusqu'à butée contre l'appareil de la gaine externe,
- tirée des conducteurs afin de serrer leur enveloppe restante grâce à l'appareil après enlèvement des tronçons d'enveloppes métalliques coupées

L'invention est décrite ci-après plus en détail à l'aide de figures ne représentant qu'un mode de réalisation préféré de l'invention.
La figure 1 est une vue de face en perspective d'un appareil conforme à l'invention, en position fermée.

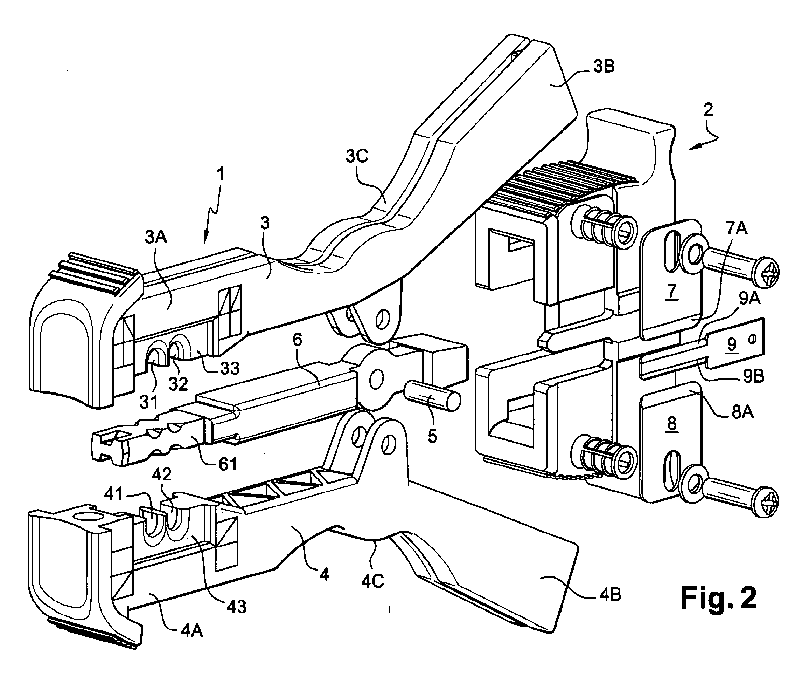

La figure 2 est une vue éclatée de face en perspective d'un appareil conforme à l'invention.
La figure 3 est une vue avant en plan d'un appareil conforme à l'invention, en position fermée.
La figure 4 est une vue arrière en plan d'un appareil conforme à l'invention, en position fermée.
La figure 5 est une vue en plan de dessus d'un appareil conforme à l'invention.
La figure 6 est une vue de face en perspective d'un appareil conforme à l'invention, en position fermée, en cours d'opération de coupe.
La figure 7 est une vue de face en perspective d'un appareil conforme à l'invention, en position fermée, avec la pièce d'équipement monté.
La figure 8 est une vue de face en perspective d'un appareil conforme à l'invention, en position ouverte.

Comme visible sur les figures, un appareil de dénudage d'un câble de transmission de données, comporte un dispositif de maintien 1 en position relative de conducteurs et un dispositif de coupe 2 des enveloppes de ces conducteurs dans un même plan. Le câble comporte une pluralité de conducteurs enveloppés par paires A, B, C, D dans une feuille métallique A1, B1 C1, D1, le dispositif de maintien 1 assure le maintien en position relative de paires de conducteurs, le dispositif de coupe assure la coupe de l'enveloppe de ces paires de conducteurs et l'appareil assure également le montage dudit câble sur une pièce d'équipement F.

Le dispositif de maintien 1 est constitué de deux branches 3, 4, de type pince, articulées autour d'un axe 5 d'une position ouverte à une position fermée et inversement, une première extrémité 3A, 4A des branches constituant un agencement de maintien comprenant des fentes 31, 32, 41, 42 en vis-à-vis séparées par une barrette centrale 6 montée sur l'articulation 5 desdites branches et une seconde extrémité 3B, 4B constituant un agencement de préhension.

Le dispositif de coupe 2 est constitué d'un agencement coulissant sur le dispositif de maintien 1 et comporte au moins quatre lames tranchantes.

Ces lames tranchantes sont portées par trois couteaux 7, 8, 9 fixés sur l'agencement coulissant 2 et disposés sur la face avant du dispositif de maintien 1, deux couteaux externes 7, 8 portant une lame tranchante 7A, 8A dirigée vers la barrette centrale 6 et un couteau central 9 portant deux lames tranchantes 9A, 9B parallèles aux précédentes et en vis-à-vis avec celles-ci.

Ces couteaux 7, 8, 9 sont amovibles. Une fois usés, ils peuvent être aisément remplacés. Par ailleurs, la position des couteaux externes 7, 8 est réglable grâce à leur trou oblong assurant leur fixation par vis. Le couteau central 9 peut quant à lui être clipsé.

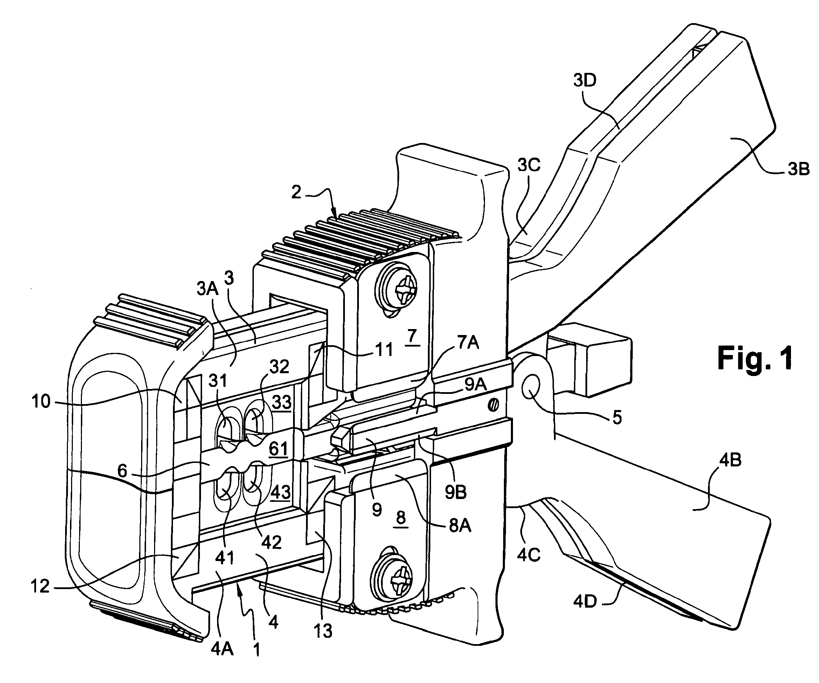

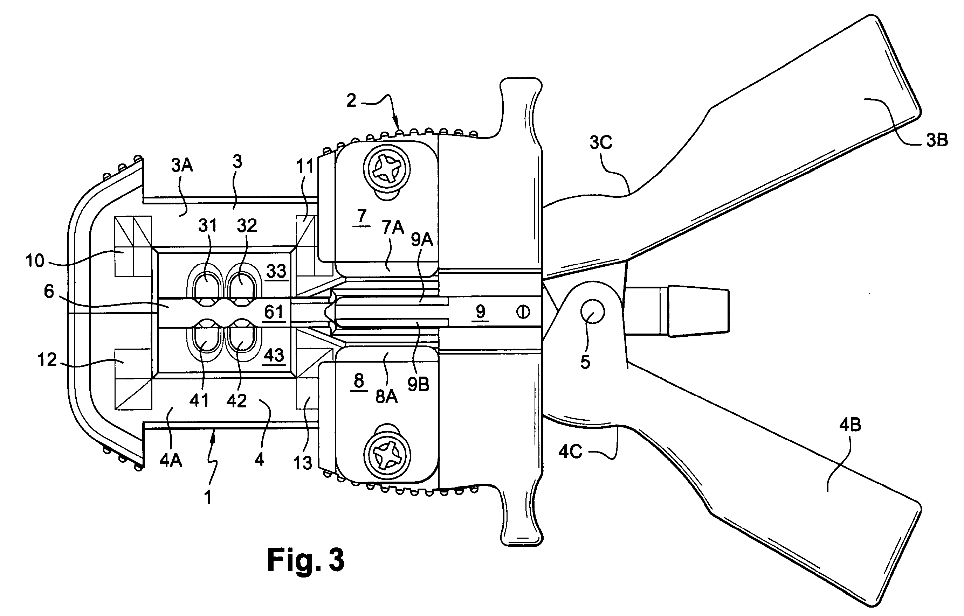

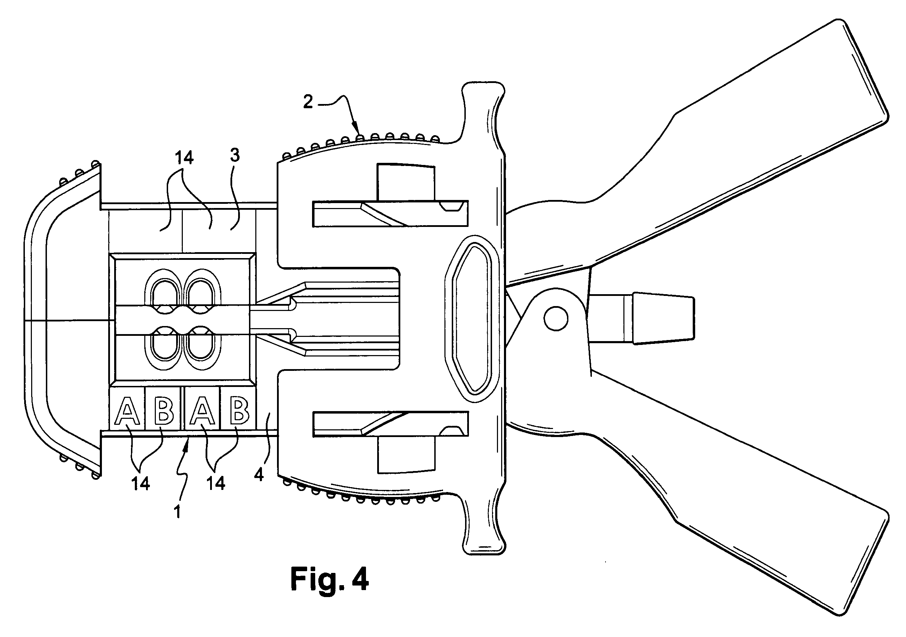

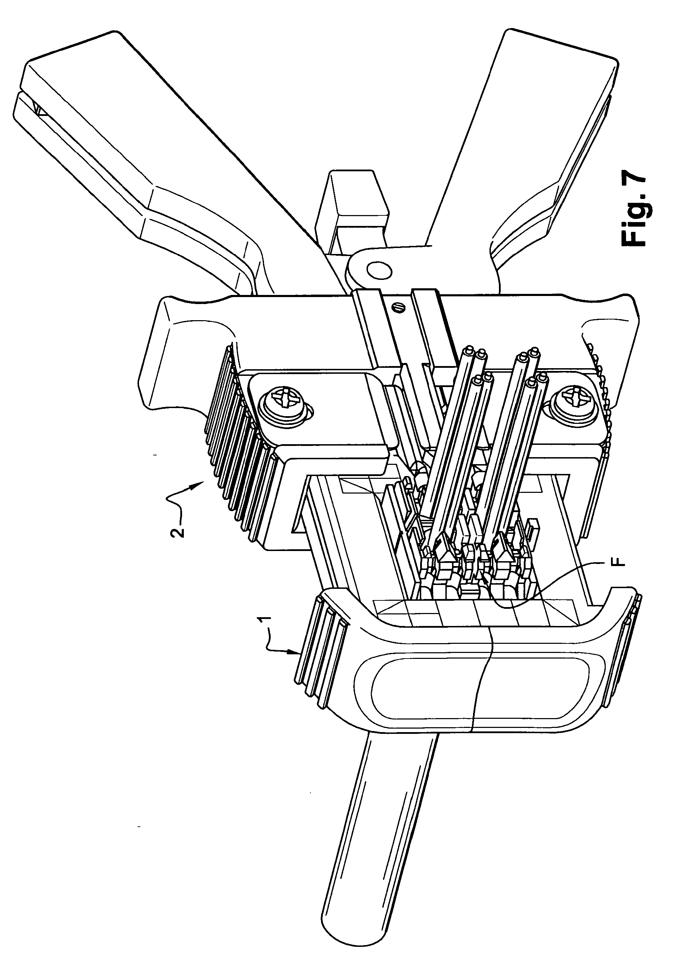

Le dispositif de maintien 1 et l'agencement coulissant 2 sont conçus de telle sorte que ce dernier bloque en position fermée ou libère de sa position fermée le dispositif de maintien 1 selon le positionnement relatif de ces deux dispositifs. Plus précisément, les branches 3, 4 du dispositif de maintien 1 sont en forme de Vé évasé et comporte à la base de ce Vé des formes courbes assurant lors du coulissement de l'agencement de coupe 2 vers les extrémités de maintien 3A, 4A la fermeture du dispositif de maintien 3, tel que représenté sur les figures 1, 3 et 4, et lors du coulissement de l'agencement de coupe 2 vers les extrémités de préhension 3B, 4B l'ouverture du dispositif de maintien 3, tel que représenté sur la figure 7.

Sur la face supérieure et sur la face inférieure de l'appareil vu selon la figure 1, chaque branche 3, 4 comporte une rainure longitudinale.

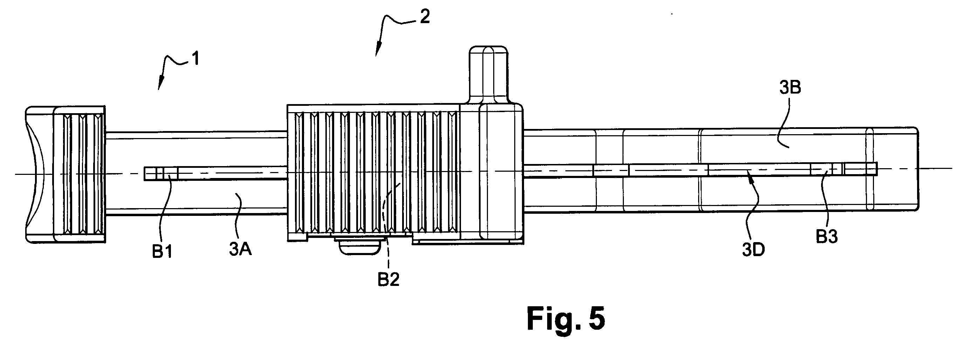

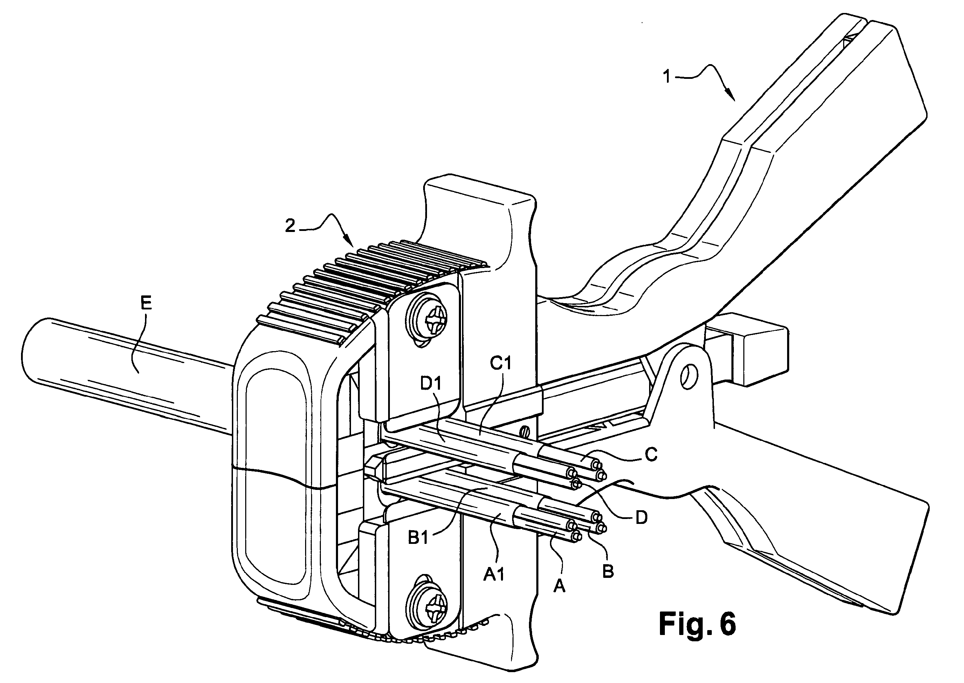

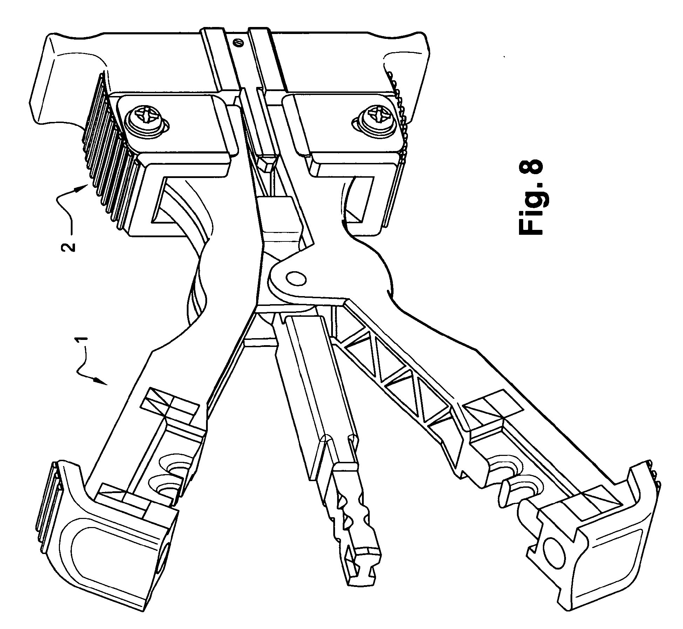

Sur la figure 5, est visible la face supérieure de l'appareil et une rainure longitudinale 3D agencée sur la branche correspondante 3. L'autre branche 4 est symétrique et présente une telle rainure 4D sur la face inférieure de l'appareil. Dans cette rainure 3D, coulisse un cliquet porté par le dispositif de coupe 2 et cette rainure 3D comporte trois agencements de butée débloquable par poussée du dispositif de coupe 2. Un premier agencement de butée B1 assure le bloquage du dispositif de coupe 2 en fin de position de coupe telle que représentée sur la figure 6. Un deuxième agencement de butée B2 assure le bloquage du dispositif de coupe 2 en position fermée telle que représentée sur les figures 1, 3, 4 et 5. Un troisième agencement de butée B3 assure le bloquage du dispositif de coupe 2 en position ouverte telle que représentée sur la figure 8.

Par ailleurs, l'appareil comporte également un agencement de positionnement de la pièce d'équipement sur les paires.

Cet agencement de positionnement de la pièce d'équipement est constitué de cavités 33, 61, 43 agencées sur les extrémités de maintien 3A, 4A des branches et sur la barrette 6, ces cavités formant une cavité d'emboîtement de la pièce d'équipement en position fermée, autour des fentes 31, 32, 41, 42 d'insertion des conducteurs. Selon le mode de réalisation illustré sur les figures, cette cavité est sensiblement carrée correspondante à la section d'une pièce terminale d'un connecteur utilisé classiquement pour de tels câbles de transmission de données. De façon générale, la forme de cette cavité est adaptée à la section de la pièce d'équipement qui peut être de toute forme, par exemple rectangulaire ou hexagonale.

Avantageusement, l'appareil et plus précisément le dispositif de maintien 1 comprend sur sa face arrière des marques de repérage 14 du positionnement relatif des paires de conducteurs, afin de faciliter la bonne disposition relative des paires.

II comporte également sur sa face avant des marques de repérage 10 à 13 du positionnement de la pièce d'équipement et du positionnement relatif de chaque conducteur..

Le procédé de montage d'un câble de transmission de données sur une pièce d'équipement F, ce câble comportant une pluralité de conducteurs enveloppés par paires A, B, C, D, dans une feuille métallique A1, B1, C1, D1, et dénudés d'une gaine externe E, comme visible sur la figure 5, grâce à l'appareil comporte les étapes suivantes :
- croisement des paires de conducteurs dénudés de la gaine externe E, selon les conditions de montage, le plus près possible de l'extrémité de la gaine externe E ;
- insertion, par la face arrière de l'appareil, des paires de conducteurs A, B, C, D dans les fentes 31, 32, 41, 42 du dispositif de maintien 1, jusqu'à butée contre l'appareil sur la face arrière de ce dernier, l'appareil étant en position fermée telle que représentée sur la figure 1, le dispositif de coupe étant bloqué sur le deuxième agencement de butée B2; cette insertion est réalisée selon les marques de repérage 14 portées par la face arrière du dispositif de maintien ;
- poussée du dispositif de coupe 2 sur les paires de conducteurs, par translation en direction des extrémités de maintien 3A, 4A, tel que représenté sur la figure 5, le dispositif de coupe venant se bloquer sur le premier agencement de butée B1;
- enlèvement des tronçons d'enveloppes métalliques coupées;
- tirée des paires de conducteurs vers l'avant, afin de serrer leur enveloppe restante grâce à l'appareil puis retour en position initiale ;
- translation du dispositif de coupe 2 en direction des extrémités de préhension 3B, 4B sans franchir la base du Vé formé par les branches 3, 4 du dispositif de maintien, tel que représenté sur la figure 1 ;
- insertion des conducteurs toujours maintenus dans le dispositif de maintien, dans la pièce d'équipement F à l'aide des marques de repérage 10 à 13 et positionnement de cette pièce F sur l'appareil, dans la cavité formée par les cavités 33, 61, 43 agencées sur les extrémités de maintien 3A, 4A des branches et sur la barrette 6, tel que représenté sur la figure 6 ;
- connexion des conducteurs sur la pièce d'équipement F selon les marques de repérage correspondantes 10 à 13 portées par la face avant du dispositif de maintien ;
- translation du dispositif de coupe 2 en direction des extrémités de préhension 3B, 4B en franchissant la base du Vé formé par les branches 3, 4 du dispositif de maintien, ce qui entraîne l'ouverture du dispositif de maintien 1, le dispositif de coupe venant se bloquer sur le troisième agencement de butée B3;
- retrait de la pièce d'équipement et des conducteurs montés sur celle-ci de la barrette 6, l'appareil étant dans la position ouverte telle qu'illustrée sur la figure 7 ;
- coupe des conducteurs au ras de la pièce d'équipement.

Selon le mode de réalisation préféré de l'invention, l'appareil est destiné au montage d'un câble électrique de transmission de données à quatre paires de conducteurs. Toujours dans le cadre de l'invention, l'appareil peut bien sûr être adapté au traitement de câbles électriques comportant un nombre différent de paires de conducteurs, en aménageant le nombre et la disposition des fentes en conséquence.

## Revendications

1. Appareil de dénudage d'un câble de transmission de données, comportant un dispositif de maintien (1) en position relative de conducteurs et un dispositif de coupe (2) des enveloppes de ces conducteurs dans un même plan, ledit câble comportant une pluralité desdits conducteurs enveloppés par paires (A, B, C, D) dans une feuille métallique (A1, B1 C1, D1), **caractérisé en ce que** ledit dispositif de maintien (1) est un dipositif de maintien en position relative de paires de conducteurs, **en ce que** ledit dispositif de coupe est un dispositif de coupe de l'enveloppe de ces paires de conducteurs et **en ce qu'**il comporte également un agencement de positionnement d'une pièce d'équipement (F) sur lesdites paires.

2. Appareil selon la revendication 1, **caractérisé en ce que** ledit dispositif de maintien (1) est constitué de deux branches (3, 4), de type pince, articulées d'une position ouverte à une position fermée et inversement, une première extrémité (3A, 4A) des branches constituant un agencement de maintien comprenant des fentes (31, 32, 41, 42) en vis-à-vis séparées par une barrette centrale (6) montée sur l'articulation (5) desdites branches et une seconde extrémité (3B, 4B) constituant un agencement de préhension.

3. Appareil selon l'une des revendications précédentes, **caractérisé en ce que** ledit dispositif de coupe (2) est constitué d'un agencement coulissant sur ledit dispositif de maintien et comportant au moins quatre lames tranchantes (7A, 8A, 9A, 9B).

4. Appareil selon la revendication précédente, **caractérisé en ce que** le dispositif de maintien (1) et ledit agencement coulissant (2) sont conçus de telle sorte que ce dernier bloque en position fermée ou libère de sa position fermée le dispositif de maintien selon le positionnement relatif de ces deux dispositifs.

5. Appareil selon les revendications 2 et 3, **caractérisé en ce que** lesdites lames tranchantes sont portées par trois couteaux (7, 8, 9) fixés sur ledit agencement coulissant (2) sur une face du dispositif de maintien, deux couteaux externes (7, 8) portant une lame tranchante (7A, 8A) dirigée vers ladite barrette centrale (6) et un couteau central (9) portant deux lames tranchantes (9A, 9B) parallèles aux précédentes.

6. Appareil selon les revendications 1 et 2, **caractérisé en ce que** ledit agencement de positionnement de la pièce d'équipement (F) est constitué de cavités (33, 43, 61) agencées sur lesdites premières extrémités (3A, 4A) des branches et sur ladite barrette (6), ces cavités formant une cavité d'emboîtement de ladite pièce d'équipement en position fermée.

7. Appareil selon l'une des revendications précédentes, **caractérisé en ce qu'**il comprend des marques de repérage (14) du positionnement relatif des paires de conducteurs.

8. Appareil selon l'une des revendications précédentes, **caractérisé en ce qu'**il comprend des marques de repérage (10 à 13) du positionnement de la pièce d'équipement (F) et du positionnement relatif de chaque conducteur.

9. Procédé de montage d'un câble de transmission de données sur une pièce d'équipement, ce câble comportant une pluralité de conducteurs enveloppés par paires (A, B, C, D) dans une feuille métallique (A1, B1, C1, D1) dénudés d'une gaine externe (E), grâce à l'appareil selon une des revendications précédentes, **caractérisé en ce qu'**il comporte les étapes suivantes :
• croisement des paires de conducteurs (A, B, C, D) dénudés de la gaine externe, selon les conditions de montage,
• insertion des paires de conducteurs dans ledit dispositif de maintien (1), jusqu'à butée contre l'appareil du côté de la gaine externe (E),
• actionnement du dispositif de coupe (2) sur les enveloppes métalliques (A1, B1, C1, D1),
• enlèvement des tronçons d'enveloppes métalliques coupées.

10. Procédé de montage selon la revendication 9, grâce à l'appareil selon la revendication 2, **caractérisé en ce qu'**il comporte les étapes ultérieures suivantes :
• insertion des conducteurs dans la pièce d'équipement (F) et positionnement de cette pièce sur l'appareil,
• connexion des conducteurs sur la pièce d'équipement (F),
• retrait de la pièce d'équipement et des conducteurs montés sur celle-ci.

11. Procédé de montage selon la revendication 9 ou 10, grâce à l'appareil selon la revendication 3, **caractérisé en ce qu'**il comporte les étapes suivantes :
• insertion des paires de conducteurs (A, B, C, D) dans ledit dispositif de maintien par insertion des conducteurs dans lesdites fentes (31, 32, 41, 42), l'appareil étant en position fermée, jusqu'à butée contre l'appareil de la gaine externe (E),
• tirée des paires de conducteurs afin de serrer leur enveloppe (A1, B1, C1, D1) restante grâce à l'appareil après enlèvement des tronçons d'enveloppes métalliques coupées.

## Claims

1. A device for stripping a data transmission cable, including a device (1) for holding conductors in a relative position and a device (2) for cutting sheaths of the conductors in a same plane, said cable including a plurality of said conductors sheathed by pairs (A, B, C, D) in a metal foil (A1, B1, C1, D1), **characterized in that** said holding device (1) is a device for holding pairs of conductors in a relative position, **in that** said cutting device is a device for cutting the sheaths of these pairs of conductors and **in that** it also includes an arrangement for positioning a piece of equipment (F) on said pairs.

2. The device according to claim 1, **characterized in that** said holding device (1) consists of two branches (3, 4) of the clamp type, jointed from an open position to a closed position and vice versa, a first end (3A, 4A) of the branches forming a holding arrangement comprising slots (31, 32, 41, 42) facing each other, separated by a central bar (6) mounted on the joint (5) of said branches and a second end (3B, 4B) forming a grip arrangement.

3. The device according to any of the preceding claims, **characterized in that** said cutting device (2) consists of an arrangement sliding on said holding device and including at least four cutting blades (7A, 8A, 9A, 9B).

4. The device according to the preceding claim, **characterized in that** the holding device (1) and said sliding arrangement (2) are designed so that the latter blocks the holding device in the closed position or releases it from its closed position according to the relative positioning of both of these devices.

5. The device according to claims 2 and 3, **characterized in that** said cutting blades are borne by three knives (7, 8, 9) attached on said sliding arrangement (2) on one face of the holding device, two external knives (7, 8) bearing a cutting blade (7A, 8A) directed towards said central bar (6) and a central knife (9) bearing two cutting blades (9A, 9B) parallel to the previous ones.

6. The device according to claims 1 and 2, **characterized in that** said arrangement for positioning the piece of equipment (F) consists of cavities (33, 43, 61) arranged on said first ends (3A, 4A) of the branches and on said bar (6), these cavities forming a cavity for fitting said piece of equipment in the closed position.

7. The device according to any of the preceding claims, **characterized in that** it comprises location marks (14) for the relative positioning of the pairs of conductors.

8. The device according to any of the preceding claims, **characterized in that** it comprises location marks (10-13) for the positioning of the piece of equipment (F) and for the relative positioning of each conductor.

9. A method for mounting a data transmission cable on a piece of equipment, this cable including a plurality of conductors sheathed by pairs (A, B, C, D) in a metal foil (A1, B1, C1, D1), stripped from an external cladding (E), by means of the device according to any of the preceding claims, **characterized in that** it includes the following steps:
• crossing the pairs of conductors (A, B, C, D) stripped from the external cladding, according to the mounting conditions,
• inserting the pairs of conductors into said holding device (1), until abutment against the device on the external cladding (E) side,
• actuating the cutting device (2) on the metal sheaths (A1, B1, C1, D1),
• removing the sections of cut metal sheaths.

10. The mounting method according to claim 9, by means of the device according to claim 2, **characterized in that** it includes the following subsequent steps:
• inserting the conductors in the piece of equipment (F) and positioning this piece on the device,
• connecting the conductors on the piece of equipment (F),
• removing the piece of equipment and the conductors mounted on the latter.

11. The mounting method according to claim 9 or 10, by means of the device according to claim 3, **characterized in that** it includes the following subsequent steps:
• inserting pairs of conductors (A, B, C, D) in said holding device by inserting the conductors in said slots (31, 32, 41, 42), the device being in the closed position, until abutment against the device of the external cladding (E),
• pulling the pairs of conductors in order to tighten their remaining sheath (A1, B1, C1, D1) by means of the device after removing the sections of cut metal sheaths.

## Patentansprüche

1. Vorrichtung zum Abisolieren eines Datenübertragungskabels mit einer Vorrichtung zum Halten (1) von Leitern in relativer Lage und einer Vorrichtung zum Schneiden (2) der Ummantelungen dieser Leiter in einer gemeinsamen Ebene, wobei das Kabel eine Vielzahl der Leiter umfasst, die paarweise (A, B, C, D) von einer Metallfolie (A1, B1 C1, D1) umhüllt sind, **dadurch gekennzeichnet, dass** die Haltevorrichtung (1) eine Vorrichtung zum Halten von Leiterpaaren in relativer Lage ist, **dadurch**, dass die Schneidevorrichtung eine Vorrichtung zum Abschneiden der Ummantelung dieser Leiterpaare ist und dass die Vorrichtung zum Abisolieren ebenfalls eine Anordnung zum Positionieren eines Geräts (F) auf den Paaren umfasst.

2. Vorrichtung nach Anspruch 1, **dadurch gekennzeichnet, dass** die Haltevorrichtung (1) aus zwei zangenartigen Schenkeln (3, 4) besteht, die gelenkig so angebracht sind, dass sie von einer geöffneten Stellung in eine geschlossene Stellung und umgekehrt bewegbar sind, wobei ein erstes Ende (3A, 4A) der Schenkel eine Halteanordnung bildet mit einander gegenüberliegenden Schlitzlöchern (31, 32, 41, 42), die durch einen Mittelsteg (6) voneinander getrennt sind, der auf der Schwenkachse (5) der Schenkel gelagert ist und wobei ein zweites Ende (3B, 4B) eine Greifanordnung bildet.

3. Vorrichtung nach einem der vorhergehenden Ansprüche, **dadurch gekennzeichnet, dass** die Schneidevorrichtung (2) aus einer auf der Haltevorrichtung verschiebbaren Anordnung besteht und mindestens vier Messerklingen (7A, 8A, 9A, 9B) umfasst.

4. Vorrichtung nach dem vorhergehenden Anspruch, **dadurch gekennzeichnet, dass** die Haltevorrichtung (1) und die verschiebbare Anordnung (2) so ausgestaltet sind, dass letztere die Haltevorrichtung je nach der jeweiligen relativen Positionierung dieser beiden Vorrichtungen in der geschlossenen Stellung blockiert, oder aus ihrer geschlossenen Stellung freigibt.

5. Vorrichtung nach den Ansprüchen 2 und 3, **dadurch gekennzeichnet, dass** die Messerklingen von drei Messern (7, 8, 9) getragen werden, die auf einer Seite der Haltevorrichtung an der verschiebbaren Anordnung (2) befestigt sind, wobei zwei äußere Messer (7, 8) eine dem Mittelsteg (6) zugewandte Messerklinge (7A, 8A) tragen, und ein mittleres Messer (9) zwei zu diesen parallel angeordnete Messerklingen (9A, 9B) trägt.

6. Vorrichtung nach den Ansprüchen 1 und 2, **dadurch gekennzeichnet, dass** die Anordnung zum Positionieren des Geräts (F) aus Aussparungen (33, 43, 61) besteht, die auf den ersten Enden (3A, 4A) der Schenkel und auf dem Steg (6) angeordnet sind, wobei diese Aussparungen in der geschlossenen Stellung eine Einsteckaufnahme für das Gerät bilden.

7. Vorrichtung nach einem der vorhergehenden Ansprüche, **dadurch gekennzeichnet, dass** sie Referenzmarkierungen (14) zur Kennzeichnung der relativen Positionierung der Leiterpaare umfasst.

8. Vorrichtung nach einem der vorhergehenden Ansprüche, **dadurch gekennzeichnet, dass** sie Referenzmarkierungen (10 bis 13) zur Kennzeichnung der relativen Positionierung des Geräts (F) und der relativen Positionierung jedes Leiters umfasst.

9. Verfahren zur Montage eines Datenübertragungskabels auf ein Gerät mithilfe der Vorrichtung nach einem der vorhergehenden Ansprüche, wobei dieses Kabel eine Vielzahl von paarweise von einer Metallfolie (A1, B1, C1, D1) umhüllten und von einer äußeren Ummantelung (E) befreiten Leitern (A, B, C, D) umfasst, **dadurch gekennzeichnet, dass** es die folgenden Schritte aufweist:
• Überkreuzen der von der äußeren Ummantelung befreiten Leiterpaare (A, B, C, D) entsprechend den Montagebedingungen
• Einführen der Leiterpaare in die Haltevorrichtung (1) bis zum Anschlag der äußeren Ummantelung (E) gegen die Vorrichtung
• Betätigen der Schneidevorrichtung (2) zum Abschneiden der metallischen Ummantelungen (A1, B1, C1, D1)
• Entfernen der abgeschnittenen Abschnitte der metallischen Ummantelung

10. Montageverfahren nach Anspruch 9 mithilfe der Vorrichtung nach Anspruch 2, **dadurch gekennzeichnet, dass** es die folgenden späteren Verfahrensschritte aufweist:
• Einführen der Leiter in das Gerät (F) und Positionierung dieses Geräts auf der Vorrichtung
• Verbinden der Leiter mit dem Gerät (F)
• Herausnehmen des Geräts und der an diesem befestigten Leiter.

11. Montageverfahren nach Anspruch 9 oder 10 mithilfe der Vorrichtung nach Anspruch 3, **dadurch gekennzeichnet, dass** es die folgenden Verfahrensschritte aufweist:
• Einführen der Leiterpaare (A, B, C, D) in die Haltevorrichtung durch Einführen der Leiter in die Schlitzlöcher (31, 32, 41, 42)) bis zum Anschlag der äußeren Ummantelung (E) gegen die Vorrichtung, wobei die Vorrichtung in geschlossener Stellung ist.
• nach dem Entfernen der abgeschnittenen Abschnitte der metallischen Ummantelungen Ziehen der Leiterpaare zum Festklemmen ihrer verbleibenden Ummantelung (A1, B1, C1, D1) mithilfe der Vorrichtung.
